# FASCICULE DE BREVET EUROPEEN

(11) **EP 3 458 349 B1**
(45) Date de publication et mention de la délivrance du brevet: **22.04.2020**
(21) Numéro de dépôt: 17727938.7
(22) Date de dépôt: 15.05.2017
(51) Int. Cl.: B63B 1/24, B63B 35/79, B29C 67/00

(54) **AILE DE DÉRIVE À COEUR STRUCTURANT MÉTALLIQUE ET ENVELOPPE SUR MESURE IMPRIMÉE PLA**
FLOSSENKIELFOLIE MIT METALLSTRUKTURIERUNGSKERN UND PERSONALISIERTER GEDRUCKTER PLA-HÜLLE
FIN KEEL FOIL WITH METAL STRUCTURING CORE AND CUSTOMISED PRINTED PLA SHELL

(30) Priorité: 20.05.2016 FR 1600814
(43) Date de publication de la demande: 27.03.2019
(73) Titulaire: Seair, 56100 Lorient (FR)
(72) Inventeur: CASTELNERAC Bertrand, 56100 - Lorient (FR)
(86) Numéro de dépôt international: PCT/FR2017/000098
(87) Numéro de publication internationale: WO 2017/198912

(56) Documents cités:
- US-A1- 2009 029 610
- US-A1- 2014 366 794
- Mets Dame Award 2014: "Glide Free Foils", , 13 novembre 2014 (2014-11-13), XP055342635, Extrait de l'Internet: URL:http://www.glidefree.com.au/GlideFreeD esign_METS Brochure_Final.pdf [extrait le 2017-02-06]
- Mcdougall ET AL: "The details", , 27 mars 2016 (2016-03-27), XP055342650, Extrait de l'Internet: URL:http://www.waszp.com/the-details [extrait le 2017-02-06]

## Description

La présente invention concerne un assemblage innovant de pièces formant une aile horizontale de dérive de bateau et son procédé de fabrication associé.

Les ailes de dérive de bateau, couramment connus sous la dénomination anglaise foil, sont des pièces qui se placent au bout des dérives et qui par leur forme donnent de la portance au bateau lorsque celui-ci prend de la vitesse. L'effet est que le bateau se soulève au-dessus de son niveau de flottaison et acquière des performances et une maniabilité améliorées.

L'invention vise plus particulièrement les foils dit en T, à savoir un bras de dérive également dénommé mât de dérive qui vient se positionner au milieu de l'aile horizontale de dérive sur l'axe de symétrie de l'aile de dérive. Les foils dit en T, sont adaptés à des types particuliers de bateau : safrans ou dérives principales de multicoques et notamment au monocoques et plus particulièrement à la classe de dériveurs monocoques de courses bien connus sous la dénomination Moth. US2014366794 A1 propose un assemblage modulaire de foil en T.

Un problème majeur qui se pose avec les ailes de dérive existantes tient à leur procédé de fabrication actuel qui génère des coûts importants et de la fragilité, cela avec un champ restreint d'utilisations selon les conditions météos. En effet, à ce jour, les procédés de fabrication des ailes de dérive dites en T, sont bien souvent des procédés artisanaux, notamment celui bien connus des planchistes et surfeurs, à savoir des procédés de stratification de matériaux composites rigides autour de pain de mousse. Ce procédé de fabrication est hautement artisanal et requiert des compétences d'artisans bien connus dénommés stratifieurs, ou sous l'expression d'origine anglaise couramment utilisée en langage français de shaper. Parfois le cycle de fabrication est même plus lourd sur des pièces plus techniques et soumises à des calculs. Les technologies pour maitriser tous les aspects de l'aile de dérive sont loin d'être acquises. Faute de modèles de calcul fiables, les formes et profils dessinés puis simulés sur ordinateur doivent être testés en condition réelle. La démarche standard pour arriver au produit finit est chronophage et couteuse, cette chaine est anti-productive si l'objectif est de produire rapidement des nouvelles ailes aux formes variées. Les solutions pour fabriquer sont multiples, la plus répandue est de concevoir les moules en 3D puis de les envoyer en usinage, le stratifieur prend ensuite le relais pour fabriquer la pièce. Cette chaine fait appel à 3 métiers, la conception, l'usinage, la stratification. Le temps de conception et de réalisation demande couramment 6 semaines de travail avant de pouvoir les essayer en mer. Dans une démarche de prototypage pour l'innovation, il est nécessaire de diminuer les intermédiaires pour réduire les coûts et le temps de fabrication. La solution proposée est alors d'utiliser des machines de fabrication additive. Généralement les ailes de dérive sont fabriqués en Carbone avec âme en mousse, le carbone reprend tous les efforts tandis que la mousse n'est absolument pas structurelle, elle est présente pour éviter que les peaux ne se rapproche évitant ainsi le délaminage. Il existe également d'autres procédés de fabrication qui reproduisent le même résultat, à savoir un cœur tendre ou creux et une périphérie enveloppante rigide. Ces procédés sont par exemple des pièces moulées qui sont creuses.

Un objet principal de l'invention vise à proposer un assemblage innovant de pièces formant aile de dérive de bateau.

Un objet de l'invention vise à améliorer le procédé de fabrication des ailes de dérive en T pour les rendre plus rapides à fabriquer.

Un objet de l'invention vise à améliorer le procédé de fabrication des ailes de dérive en T pour les rendre plus économiques à fabriquer.

Un objet de l'invention vise à améliorer le procédé de fabrication des ailes de dérive en T pour les rendre plus simples à tester.

Un objet de l'invention vise à permettre d'individualiser facilement les caractéristiques hydrodynamiques d'une aile sans avoir à changer l'ensemble de l'aile.

Un objet de l'invention vise à proposer une aile qui se monte facilement et rapidement et qui réponde aux contraintes acceptables que puisse supporter un navigateur du dimanche qui vienne réparer, ajuster, modifier certaines caractéristiques

Dans un aspect principal, l'invention vise à industrialiser une partie structurante de l'aide et à l'habiller d'une partie enveloppante sur mesure. La partie structurante apportant notamment les qualités mécaniques de rigidité souhaitées et la partie enveloppante apportant les qualités d'hydrodynamiques spécifiques pour s'adapter aux spécificités du bateau, de la météo, du navigateur.

Dans un aspect principal, en coupe, l'invention propose une partie structurante de l'aile qui soit au cœur de l'aile, réalisée partir d'usinage métal. La partie enveloppante est-elle réalisée sur mesure et vient habiller la partie centrale. L'invention inverse donc totalement le paradigme existant des ailes de dérive existantes. Les ailes de dérive existantes reprennent la philosophie de fabrication des planches de surf ou de planche à voile, qui proposent des parties structurantes qui sont sur la périphérie de l'aile au moyen des matériaux composites qui sont stratifiés, tandis que le cœur de l'aile est réalisé en creux ou en mousse légère qui sert juste finalement de support pour stratifier la couche extérieure structurante. L'invention prend le sujet à rebours et propose un cœur d'aile qui soit structurant réalisé en alliage métallique léger, et une périphérie d'aile enveloppante dénommée enveloppe qui soit réalisée sur mesure en impression 3D et qui vienne s'emboiter sur le cœur structurant rigide.

Dans un aspect particulier, le cœur d'aile est lui-même réalisé en plusieurs parties par la superposition de plusieurs plaques de métal spécialement usinées.

Dans un aspect particulier, l'enveloppe de l'aile est réalisée en plusieurs pièces qui viennent s'emboiter entre elles ainsi que sur la structure de cœur d'aile. Les pièces de l'enveloppe d'aile sont fabriquées en impression 3D avec du matériau connu de type filament PLA, qui est un acide polylactique qui est un polymère entièrement biodégradable notamment utilisé dans l'emballage.

Dans un aspect particulier, l'ensemble de l'aile, cœur d'aile et enveloppe d'aile est ensuite assemblé par vissage.

L'invention sera mieux comprise à la lecture du mode particulier de l'invention sur lesquels les figures annexées représentent
La figure la représente une vue de haut de la première plaque extérieure de cœur d'aile dite plaque externe haute
La figure 1b représente une vue de haut de la seconde plaque extérieure de cœur d'aile dite plaque externe basse
La figure 1c représente une vue de haut de la plaque centrale de cœur d'aile dite plaque centrale
La figure 2a représente une vue de haut de la partie externe de l'enveloppe
La figure 2b représente une vue de haut de la partie centrale de l'enveloppe
La figure 2c représente une vue de profil de la partie centrale de l'enveloppe
La figure 3 représente une vue d'ensemble en vue de haut de l'invention

La figure la représente une vue de haut de la première plaque extérieure de cœur d'aile dite plaque de cœur externe haute (11), qui comprend des réservations pour le passage de vis (16) pour la fixation des trois plaques de cœur entre elles, des réservations d'emplanture (17) pour créer le volume intérieur de l'emplanture.

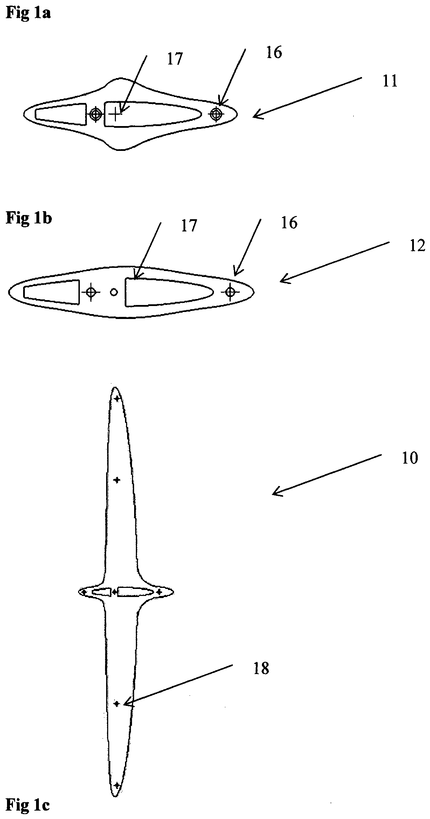

La figure 1b représente une vue de haut de la seconde plaque extérieure de cœur d'aile dite plaque externe de cœur basse (12) qui comprend des réservations pour le passage de vis (16) pour la fixation des trois plaques de cœur entre elles, des réservations d'emplanture (17) pour créer le volume intérieur de l'emplanture.

La figure 1c représente une vue de haut de la plaque centrale de cœur d'aile dite plaque de cœur centrale (10) qui comprend des réservations pour le passage de vis (16) pour la fixation des trois plaques de cœur entre elles, des réservations d'emplanture (17) pour créer le volume intérieur de l'emplanture, des réservations (18) pour la fixation de l'enveloppe (20).

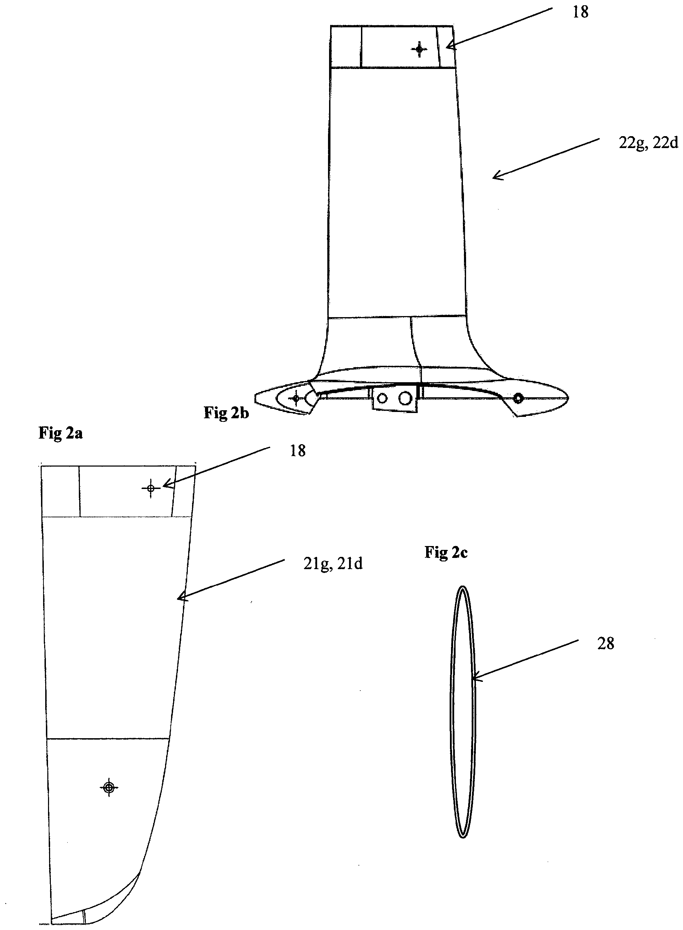

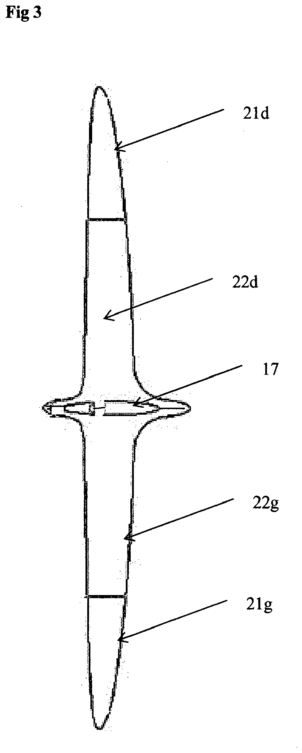

Les trois plaques de cœur (10, 11, 12) sont ensuite assemblées ensemble au moyen de vis boulonnés forment une structure de cœur rigide. Les trois plaques sont préférentiellement réalisées en matériau INOX. Leur épaisseur est de quelques millimètres. L'intérêt de ce mode de fabrication est qu'il permet de réaliser une structure de cœur qui soit rigide, économique, réalisée à partir de trois matériaux de base qui sont économiques et automatiques à fabriquer, à savoir de la tôle découpée. L'assemblage formant un cœur en volume qui forment l'aile pour la portance et son emplanture pour venir y solidariser le bras de dérive. On pourrait dire que la plaque de cœur centrale (10) qui est longue et reproduit le dessin de l'aile donne la rigidité de l'aile sur sa longueur, tandis que l'assemblage des trois plaques de cœur (10,11, 12) donne essentiellement la rigidité de l'emplanture. Il pourrait être possible de réaliser ce cœur d'aile en une seule pièce mais cela couterait beaucoup plus cher à la fabrication et nécessiterait des machines peu courantes qui sachent travailler le métal sur des volumes 3D de plusieurs dizaines de centimètres de longueur. Comme représenté en figures rubrique 2, l'enveloppe est constitué par l'assemblage de quatre sous parties à savoir une enveloppe externe gauche (21g), une enveloppe centrale gauche (22g), d'une enveloppe centrale droite (22d), d'une enveloppe externe droite (21d). Ces sous parties d'enveloppe enveloppes comprennent une réservation intérieure creuse (28) qui épouse la forme du cœur de l'aile voir figure 2b et figure 2d, et viennent s'enfiler sur le cœur de l'aile et viennent se fixer à travers des réservations (18) au moyen de visseries sur le cœur de l'aile. Notamment, la figure 2a représente une vue de haut de la partie externe gauche (21g) de l'enveloppe, symétrique de la partie externe droite (21d), la figure 2b représente une vue de profil de la partie centrale gauche (22g) de l'enveloppe, symétrique de la partie centrale droite (22d). Les parties d'enveloppes comprennent des parties complémentaires de façon emboîtement entre elles. Cet emboîtement est notamment clé au niveau de l'emplanture de façon à verrouiller l'assemblage. L'ensemble des parties externes et centrales des enveloppes de l'aile, monté sur l'aile forme une aile à la surface parfaitement lisse. Les visseries sont couramment colmatées de mastic de façon à rendre la surface au niveau de la visserie la plus lisse possible. La figure 3 représente une vue d'ensemble en vue de haut de l'invention qui montre bien comment on peut facilement grâce à l'invention réaliser une aile de toute forme effilée, avec son emplanture centrale (17), et sa surface lisse. En bref, l'invention réalise à partir de l'assemblage astucieux de différentes pièces peu couteuses un ensemble complet aux caractéristiques hydro mécaniques optimisées, aux formes travaillées complexes, qui se monte rapidement.

La présente invention concerne donc un aile de dérive de bateau se fixant à un bras de dérive par une emplanture caractérisée en ce qu'elle est réalisé par l'assemblage d'un cœur d'aile et d'une enveloppe, le cœur d'aile donne la rigidité, il est réalisé en alliage métallique léger, il forme une réservation d'emplanture et il offre une surface d'accroche pour l'enveloppe qui est réalisée par impression 3D et qui vient s'emboiter et se fixer sur le cœur d'aile.

La présente invention concerne donc une aile de dérive de bateau caractérisée en ce que le cœur d'aile est réalisé par l'assemblage de trois plaques de métal usinées (10, 11, 12) et superposées solidarisées entre elles.

La présente invention concerne donc une aile de dérive de bateau caractérisée en ce que l'enveloppe est réalisée en plusieurs morceaux qui s'emboitent entre eux dont notamment une partie d'enveloppe externe et une partie d'enveloppe interne.

La présente invention concerne donc une aile de dérive de bateau une aile de dérive de bateau est une dérive dite en T avec une emplanture qui sépare symétriquement l'aile de gauche à droite.

La présente invention concerne donc un procédé de montage d'une aile de dérive de bateau en T qui comprenne les étapes successives suivantes :
- Montage du cœur d'aile par assemblage par vissage de trois plaques (10, 11, 12) de cœur d'aile
- Emboîtage des enveloppes centrales gauche et droite (22g, 22d)
- Emboitage des enveloppes externes gauche et droite (21g, 21d)
- Vissage des enveloppes centrales et externes sur le cœur d'aile

## Revendications

1. Aile de dérive de bateau se fixant à un bras de dérive par une emplanture réalisé par l'assemblage d'un cœur d'aile et d'une enveloppe, le cœur d'aile donne la rigidité, il est réalisé en alliage métallique léger, il forme une réservation d'emplanture (17) et il offre une surface d'accroche pour l'enveloppe qui est réalisée par impression 3D et qui vient s'emboiter et se fixer sur le cœur d'aile pour épouser la forme du cœur d'aile **caractérisé en ce que** le cœur d'aile est réalisé par l'assemblage de trois plaques de métal usinées (10, 11, 12), superposées, solidarisées entre elles avec au milieu une plaque de cœur centrale (10) longue qui reproduit le dessin de l'aile, lui donne sa rigidité sur sa longueur, l'ensemble du cœur d'aile est recouvert au centre avec une enveloppe centrale (22g, 22d) et à l'extérieur avec une enveloppe externe (21g, 21d), les enveloppes centrales et externes s'emboitent pour former une surface d'aile extérieure parfaitement lisse.

2. Aile de dérive de bateau selon la revendication 1 **caractérisée en ce que** l'enveloppe centrale (22g, 22d) est constitué par l'assemblage de deux sous parties à savoir une enveloppe centrale droite (22d), une enveloppe centrale gauche (22g), ces sous parties d'enveloppe enveloppes comprennent une réservation intérieure creuse (28) qui épouse la forme du cœur de l'aile et viennent s'enfiler sur le cœur de l'aile et viennent se fixer à travers des réservations (18) au moyen de visseries sur le cœur de l'aile, à travers les trois plaques (10, 11, 12) de cœur d'aile, l'enveloppe externe (21g, 21d) est constitué par l'assemblage de deux sous parties à savoir une enveloppe externe droite (21d), d'une enveloppe externe gauche (21g) qui s'emboitent avec les enveloppent centrales et qui se fixent sur la plaque de coeur centrale (10).

3. Aile de dérive selon la revendication 1 **caractérisée en ce que** l'aile de dérive de bateau est une dérive dite en T avec une emplanture (17) qui sépare symétriquement l'aile de gauche à droite.

4. Procédé de montage d'une aile de dérive de bateau en T selon les revendications 2 et 3 qui comprenne les étapes successives suivantes :
• Montage du cœur d'aile par assemblage par vissage de trois plaques (10, 11, 12) de cœur d'aile
• Emboîtage des enveloppes centrales gauche et droite (22g, 22d)
• Emboitage des enveloppes externes gauche et droite (21g, 21d)
• Vissage des enveloppes centrales et externes sur le cœur d'aile

## Patentansprüche

1. Schwert, am Schwertarm befestigt mittels einer Schwertwurzel, und hergestellt durch den Zusammenbau eines Schwertkerns und einer Hülle. Der Kern garantiert Steifheit und besteht aus einer leichten Metalllegierung. Er besitzt eine Aussparung für die Wurzel (17) und bietet eine Oberfläche zur Befestigung der Hülle, die durch 3D-Druck hergestellt wird und zur Form des Schwertkerns passt. Der Schwertkern ist **dadurch gekennzeichnet, dass** er durch die Verbindung von drei gefertigten Metallplatten (10, 11, 12) hergestellt wird mit einer langen zentralen Kernplatte (10), welche die Form des Schwertes besitzt und über seine gesamte Länge Steifheit gibt. Der Schwertkern ist in der Mitte mit einer inneren Hülle (22g, 22d) und außen mit einer äußeren Hülle (21g, 21d) überzogen. Die zwei Hüllen greifen ineinander, um eine perfekt glatte äußere Schwertoberfläche zu bilden.

2. Schwert, nach Forderung 1 **dadurch gekennzeichnet, dass** die inneren Hülle (22g, 22d) aus zwei Teilen besteht, nämlich einer rechten inneren Hülle (22d) und einer linken inneren Hülle (22g). Diese enthalten Hohlräume (28), die der Form des Schwertkerns entsprechen, so dass sie sich auf den Kern aufziehen lassen. Sie werden durch Aussparungen (18) mit Hilfe von Schrauben und Bolzen durch die drei Platten (10, 11, 12) am Kern fixiert. Die äußere Hülle (21g, 21d) ist ebenfalls aus zwei Teilen gebildet, nämlich einer rechten äußeren Hülle (21d) und einer linken äußeren Hülle (21g), die mit den inneren Hüllen ineinander greifen und auf der zentralen Kernplatte (10) befestigt sind.

3. Schwert, nach Forderung 1 **dadurch gekennzeichnet, dass** es ein sogenanntes T-Schwert ist mit einer Wurzel (17), die es symmetrisch nach links und rechts teilt.

4. Verfahren zum Montieren eines T-Schwerts nach den Forderungen 2 und 3, welches die folgenden Schritte umfasst:
Montage des Schwertkerns durch Verschrauben von drei Platten (10, 11, 12)
Aufziehen der linken und rechten inneren Hüllen (22g, 22d)
Aufziehen der linken und rechten äusseren Hüllen (21g, 21d)
Verschrauben der inneren und äußeren Hülle am Schwertkern

## Claims

1. Boat drift wing attaching to a drift arm by a root made by assembling a wing core and an envelope, the wing core gives rigidity, it is made of light metal alloy, it forms a root reservation (17) and it provides a gripping surface for the envelope which is made by 3D printing and which is nested and attached to the wing core to fit the shape of the heart core **characterized in that** the wing core is formed by the assembly of three machined metal plates (10, 11, 12), overlayed, secured together with in the middle a central core plate (10) which reproduces the design of the wing, gives it its rigidity along its length, the whole wing core is covered in the center with a central envelope (22g, 22d) and outside with an outer envelope (21g, 21d), the central and outer envelopes fit together to form an outer perfectly smooth wing surface.

2. Wing drifting boat according to claim 1 **characterized in that** the central casing (22g, 22d) is constituted by the assembly of two sub-parts namely a central right envelope (22d), a central left envelope (22g).), these envelopes envelopes subparts include a hollow interior reservation (28) which matches the shape of the heart of the wing and are slipped on the heart of the wing and are fixed through reservations (18) by means of screwings on the wing core, through the three wing core plates (10, 11, 12), the outer shell (21g, 21d) is constituted by the assembly of two sub-parts to namely a right outer envelope (21d), a left outer envelope (21g) which fit with the central envelopes and which are fixed on the central core plate (10).

3. Wing according to claim 1 **characterized in that** the wing of the boat is a T shaped drift with a root (17) which symmetrically separates the wing from left to right.

4. A method of mounting a T shaped drift wing according to claims 2 and 3 which comprises the following successive steps:
• Assembly of the wing core by screw connection of three wing core plates (10, 11, 12)
• Nesting the left and right center envelopes (22g, 22d)
• Enclosure of the outer envelopes left and right (21g, 21d)
• Screwing the central and outer envelopes on the wing core
